# EUROPÄISCHE PATENTANMELDUNG

(11) **EP 2 416 067 A2**
(43) Veröffentlichungstag der Anmeldung: **08.02.2012**
(21) Anmeldenummer: 11006349.2
(22) Anmeldetag: 02.08.2011
(51) Int. Cl.: F23C 13/00, F23C 7/00, F23D 14/22, F23L 7/00

(54) **Reaktivwärmetauscher**

(30) Priorität: 06.08.2010 DE 102010033635
(71) Anmelder: Linde Aktiengesellschaft, 80331 Munich (DE)
(72) Erfinder: Tautz, Hanno, 82538 Geretsried (DE)

(57) **Zusammenfassung**

Die Erfindung betrifft einen Wärmetauscher (W) mit wenigstens einer ersten und einer zweiten Passage, wobei die erste Passage (A) einen Reaktionsraum darstellt, in dem durch Oxidation brennbarer Stoffe aus einem brennbare Stoffe enthaltenden Brenngas (1) ein Heizgas erzeugt werden kann, während durch die zweite Passage (V,R,S) ein Fluid (3) so führbar ist, dass Wärme durch indirekten Wärmetausch aus dem Heizgas auf das Fluid übertragen wird. Der Wärmetauscher (W) umfasst eine Zuführeinrichtung für ein Oxidationsmittel, über die wenigstens an zwei in Strömungsrichtung des Heizgases versetzt angeordneten Austrittöffnungen (Z) Oxidationsmittel in die erste Passage (A) kontrolliert eingeleitet werden kann.

## Beschreibung

Die Erfindung betrifft einen Wärmetauscher mit wenigstens einer ersten und einer zweiten Passage, wobei die erste Passage einen Reaktionsraum darstellt, in dem durch Oxidation brennbarer Stoffe aus einem brennbare Stoffe enthaltenden Brenngas ein Heizgas erzeugt werden kann, während durch die zweite Passage ein Fluid so führbar ist, dass Wärme durch indirekten Wärmetausch aus dem Heizgas auf das Fluid übertragen wird.

Ein derartiger Wärmetauscher wird in einer Patentanmeldung offenbart, die unter dem Aktenzeichen DE102009057893.5 beim Deutschen Patent- und Markenamt eingereicht wurde, und deren Inhalt durch Bezugnahme vollständig in die vorliegende Anmeldung aufgenommen wird. Der Wärmetauscher ist Bestandteil einer Vorrichtung zur Verbrennung eines kohlenstoffhaltigen Einsatzstoffs, wobei eine seiner Passagen als Reaktionsraum ausgeführt ist, in dem ein Brenngas unter Verwendung von technisch reinem Sauerstoff als Oxidationsmittel in ein Heizgas umgesetzt werden kann. Über eine zweite Passage können Wasser und/oder Wasserdampf so durch den Wärmetauscher geführt werden, dass Wärme aus dem Heizgas in indirektem Wärmetausch auf sie übertragbar ist. Der erzielbare Wärmeübertrag, und damit die Leistung des Wärmetauschers, sind proportional zum Massenstrom des Heizgases sowie zur Temperaturdifferenz zwischen dem zu erwärmenden Wasser bzw. dem Wasserdampf und dem Heizgas. Einer Anhebung der Wärmetauscherleistung durch die Erhöhung es Heizgas-Massenstromes sind durch einen steigenden Druckverlust Grenzen gesetzt. Nach dem Stand der Technik wird bei der Oxidation eines Brenngases eine Flamme erzeugt, deren Temperatur weit oberhalb der mittleren Temperatur des dabei entstehenden Heizgases liegt. Da die Flammentemperatur die maximal zulässige Materialtemperatur des Wärmetauschers nicht überschreiten darf, stellt sie den limitierenden Faktor bei dem Versuch dar, die Wärmetauscherleistung durch Anhebung der Heizgastemperatur zu steigern.

Aufgabe der Erfindung ist es, einen gattungsgemäßen Wärmetauscher anzugeben, der gegenüber dem Stand der Technik eine effektivere Wärmeübertragung zwischen Heizgas und Fluid ermöglicht.

Diese Aufgabe wird dadurch gelöst, dass er eine Zuführeinrichtung für ein Oxidationsmittel umfasst, über die wenigstens an zwei in Strömungsrichtung des Heizgases versetzt angeordnete Austrittsöffnungen Oxidationsmittel kontrolliert in die erste Passage eingeleitet werden kann.

Der Aufbau des erfindungsgemäßen Wärmetauschers erlaubt es, Wärme dezentral gezielt dort zu erzeugen, wo sie benötigt wird. Durch Variation von Anzahl und Anordnung der Austrittsöffnungen ist es möglich, Wärme aus dem Heizgas in beliebiger Näherung isotherm auf ein durch die zweite Passage des Wärmetauschers strömendes Fluid zu übertragen.

Prinzipiell kann der erfindungsgemäße Wärmetauscher in jeder beliebigen aus dem Stand der Technik bekannten Bauform ausgeführt sein. Vorzugsweise ist er jedoch als Rohbündelwärmetauscher oder als gewickelter Wärmetauscher oder als Plattenwärmetauscher ausgeführt, wobei die erste Passage durch den Mantelraum oder durch eines oder mehrere Rohre bzw. Kanäle des jeweiligen Wärmetauschers verläuft.

Der erfindungsgemäße Wärmetauscher ist besonders zur Erhitzung und/oder Verdampfung von Wasser und/oder zur Überhitzung von Wasserdampf geeignet. Ausführungsformen der Erfindung sehen daher vor, dass der Wärmetauscher zumindest eine Passage aufweist, über die Wasser und/oder Wasserdampf so geführt werden können, dass Wärme aus dem Heizgas auf sie übertragen wird. Andere Ausführungsformen sehen vor, dass der Wärmetauscher zumindest eine Passage aufweist, in der eine endotherme chemische Reaktion durchgeführt werden kann, wobei zumindest ein Teil der hierfür notwendigen Energie in Form von Wärme aus dem Heizgas auf die an der Reaktion beteiligten Reaktanden übertragen wird.

Dem erfindungsgemäßen Wärmetauscher kann jedes beliebige Brenngas, wie z. B. Erdgas, Propan, Wasserstoff oder Gemische dieser Gase, zugeführt werden. Vorzugsweise ist er jedoch so ausgelegt, dass ein Wasserstoff und Kohlenmonoxid enthaltendes Synthesegas als Brenngas in die erste Passage eingeleitet werden kann.

Als Oxidationsmittel kann dem erfindungsgemäßen Wärmetauscher Luft oder mit Sauerstoff angereicherte Luft oder ein vorwiegend aus Sauerstoff und Kohlendioxid gebildetes Gasgemisch zugeführt werden. Eine besonders bevorzugte Ausführungsform sieht jedoch vor, dass technisch reiner Sauerstoff als Oxidationsmittel über die Zuführeinrichtung in den Wärmetauscher eingeleitet werden kann.

Der erfindungsgemäße Wärmetauscher kann mit einer Zündeinrichtung ausgestattet sein, über die der ersten Passage Energie zugeführt werden kann, um die Reaktion zwischen Brenngas und Oxidationsmittel zu starten. Die erste Passage kann auch einen Katalysator enthalten, durch den die Aktivierungsenergie der Oxidationsreaktion herabgesetzt wird. Eine bevorzugte Ausführungsform des Wärmetauschers sieht vor, dass das Brenngas der ersten Passage mit einer Temperatur zugeführt werden kann, die ausreichend hoch ist, um die Oxidationsreaktion alleine durch Zumischung von Oxidationsmittel und ohne zusätzliche Energiezufuhr starten zu können.

Je nach Einsatzzweck kann der erfindungsgemäße Wärmetauscher unterschiedliche Druckfestigkeiten aufweisen. Zweckmäßigerweise ist er ausreichend druckfest ausgelegt, so dass Medien mit Drücken zwischen 0,05 und 400 bar (a), bevorzugt zwischen 1 und 120 bar (a) und besonders bevorzugt zwischen 6 und 90 bar (a) durch ihn geführt werden können.

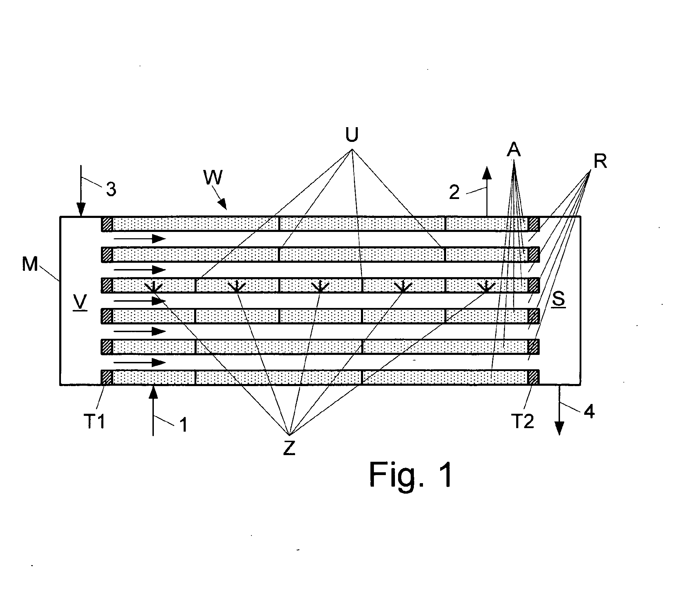

Im Folgenden soll die Erfindung anhand eines in der Figur 1 schematisch dargestellten Ausführungsbeispiels näher erläutert werden.

Die Figur 1 zeigt einen Längsschnitt durch einen in Rohrbündelbauweise ausgeführten Wärmetauscher der erfindungsgemäßen Art.

Der Wärmetauscher W besteht aus einem Mantelrohr M, in dessen Innenraum ein aus Rohren R bestehendes Rohrbündel angeordnet ist, das in Verbindung mit den beiden Trennwänden T1 und T2 den Mantelraum A, den Verteilerraum V sowie den Sammelraum S abgrenzt. Auf diese Weise werden zwei Passagen gebildet, von denen die erste durch den Mantelraum A und die zweite über den Verteilerraum V, die Rohre R sowie den Sammelraum S verläuft. Über die Leitung 1 ist ein oxidierbare Stoffe enthaltendes Brenngas, wie beispielsweise ein Wasserstoff und Kohlenmonoxid enthaltendes Synthesegas, in den Mantelraum A einleitbar, den es, durch die Umlenkbleche U geführt, durchquert, bevor es den Wärmetauscher W über Leitung 2 verlässt. Im Mantelraum A sind entlang des Strömungsweges des Brenngases 1 Austrittsöffnungen Z angeordnet, die Teil einer Zuführungseinrichtung sind, über ein Oxidationsmittel, wie beispielsweise technisch reiner Sauerstoff, in das Brenngas 1 kontrolliert eindosiert werden kann. Durch die zweite Passage kann beispielsweise Wasser durch den Wärmetauscher W geleitet werden, das in flüssiger Form über Leitung 3 zu- und in Dampfform über Leitung 4 abströmt. Die für die Erwärmung und Verdampfung des Wassers und ggf. die Überhitzung des Wasserdampfes benötigte Energie wird durch Oxidation von Bestandteilen des Brenngases bereitgestellt. Hierzu kann über die Austrittsöffnungen Z Oxidationsmittel jeweils in einer Menge in das Brenngas eindosiert werden, durch die ein Heizgas erzeugt wird, das aufgrund seiner Temperaturverteilung zu einer quasi-isothermen Wärmeübertragung führt.

## Patentansprüche

1. Wärmetauscher mit wenigstens einer ersten und einer zweiten Passage, wobei die erste Passage einen Reaktionsraum darstellt, in dem durch Oxidation brennbarer Stoffe aus einem brennbare Stoffe enthaltenden Brenngas ein Heizgas erzeugt werden kann, während durch die zweite Passage ein Fluid so führbar ist, dass Wärme durch indirekten Wärmetausch vom Heizgas auf das Fluid übertragen wird, **dadurch gekennzeichnet, dass** er eine Zuführeinrichtung für ein Oxidationsmittel umfasst, über die wenigstens an zwei in Strömungsrichtung des Heizgases versetzt angeordneten Austrittöffnungen Oxidationsmittel in die erste Passage kontrolliert eingeleitet werden kann.

2. Wärmetauscher nach Anspruch 1, **dadurch gekennzeichnet, dass** er als Rohbündelwärmetauscher oder als gewickelter Wärmetauscher oder als Plattenwärmetauscher ausgeführt ist, wobei die erste Passage durch den Mantelraum oder durch eines oder mehrere Rohre bzw. Kanäle des Wärmetauschers verläuft.

3. Wärmetauscher nach einem der Ansprüche 1 oder 2, **dadurch gekennzeichnet, dass** Wasser und/oder Wasserdampf durch die zweite Passage geführt werden können.

4. Wärmetauscher nach einem der Ansprüche 1 bis 3, **dadurch gekennzeichnet, dass** der Wärmetauscher zumindest eine Passage aufweist, in der eine endotherme chemische Reaktion durchgeführt werden kann, wobei zumindest ein Teil der hierfür notwendigen Energie in Form von Wärme aus dem Heizgas auf die an der Reaktion beteiligten Reaktanden übertragen wird.

5. Wärmetauscher nach einem der Ansprüche 1 bis 4, **dadurch gekennzeichnet, dass** ein Synthesegas als Brenngas in die erste Passage eingeleitet werden kann.

6. Wärmetauscher nach einem der Ansprüche 1 bis 5, **dadurch gekennzeichnet, dass** ein vorwiegend aus Sauerstoff und Kohlendioxid gebildetes Gasgemisch oder technisch reiner Sauerstoff als Oxidationsmittel in die erste Passage eingeleitet werden kann.

7. Wärmetauscher nach einem der Ansprüche 1 bis 6, **dadurch gekennzeichnet, dass** er mit einer Zündeinrichtung ausgestattet, über die der ersten Passage Energie zugeführt werden kann, um die Reaktion zwischen Brenngas und Oxidationsmittel zu starten.

8. Wärmetauscher nach einem der Ansprüche 1 bis 7, **dadurch gekennzeichnet, dass** die erste Passage einen Katalysator enthält, durch den die Aktivierungsenergie der Oxidationsreaktion herabgesetzt wird.

9. Wärmetauscher nach einem der Ansprüche 1 bis 8, **dadurch gekennzeichnet, dass** er so ausgeführt ist, das das Brenngases der ersten Passage mit einer Temperatur zugeführt werden kann, die ausreichend hoch ist, um die Oxidationsreaktion alleine durch Zumischung von Oxidationsmittel und ohne zusätzliche Energiezufuhr starten zu können.

10. Wärmetauscher nach einem der Ansprüche 1 bis 9, **dadurch gekennzeichnet**, Medien mit Drücken zwischen 0,05 und 400 bar (a), bevorzugt zwischen 1 und 120 bar (a) und besonders bevorzugt zwischen 6 und 90 bar (a) durch ihn geführt werden können.
